# EUROPEAN PATENT APPLICATION

(11) **EP 0 973 297 A2**
(43) Date of publication of application: **19.01.2000**
(21) Application number: 99305377.6
(22) Date of filing: 06.07.1999
(51) Int. Cl.: H04L 12/26, H04L 29/06

(54) **Web based remote monitoring/control of a measurement instrument**

(30) Priority: 17.07.1998 US 118425
(71) Applicant: TEKTRONIX, INC., Wilsonville, Oregon 97070-1000 (US)
(72) Inventor: Gauland, Michael A., Hillsboro, Oregon 97123 (US)
(74) Representative: Burke, Steven David

(57) **Abstract**

A measurement instrument is web enabled, enabling it to receive commands or information to effectuate an operation on the measurement instrument from a user using a browser executing on a remote client computer. In response, the operation is effectuated in accordance with the commands or information provided. Results of the operation, where applicable, are returned to the browser of the remote client computer for the user. The operation may be any one of a number of monitoring or control operations, and the commands or information facilitate identification of the monitoring or control operation of interest. The results of the operation may include data obtained from the measurement instrument.

## Description

### Field of the Invention

The present invention relates to the field of measurement instruments. In particular, the present invention relates to monitoring or control of a measurement instrument.

### Background of the Invention

Various measurement instruments including oscilloscopes are known in the art. Measurement instruments are used in a wide variety of applications, from measuring engine vibrations to measuring brain waves, just to name a couple of examples. Conventional measurement instruments all suffer from at least the following disadvantages:
(a) monitoring or controlling from a proximity close to the location where measurements are being taken is typically required, and
(b) for remote monitoring or control, e.g. in space explorations, proprietary interfaces or mechanism must be specifically provided.

Since it is often desirable in routine earthly usage of measurement instruments to monitor or control a measurement instrument from a remote location physically separated from the location where measurements are being taken, e.g. from an office next door, from an adjacent building, or from a different plant site, it is desirable to have a more easily enabled and more user friendly approach to facilitate the desired remote monitoring or control. As will be disclosed in more detail below, the present invention achieves these and other desirable results.

### SUMMARY OF THE INVENTION

A measurement instrument is web enabled, enabling it to receive commands or information to effectuate an operation on the measurement instrument from a user using a browser executing on a remote client computer. In response, the operation is effectuated in accordance with the commands or information provided. Results of the operation, where applicable, are returned to the browser of the remote client computer for the user. The operation may be any one of a number of monitoring or control operations, and the commands or information facilitate identification of the monitoring or control operation of interest. The results of the operation returned may include data obtained from the measurement instrument.

In one embodiment, the measurement instrument is web enabled by coupling the measurement instrument to a server computer equipped with a web server, a script executor and one or more web pages having one or more associated scripts to facilitate the interactions between the user using the browser of the remote client computer and the measurement instrument.

In an alternate embodiment, the measurement instrument is equipped with a web based control subsystem including a web server, a script executor and one or more web pages having one or more associated scripts to facilitate the interactions between the user using the browser of the remote client computer and the measurement instrument.

### BRIEF DESCRIPTION OF DRAWINGS

The present invention will be described by way of exemplary embodiments, but not limitations, illustrated in the accompanying drawings in which like references denote similar elements, and in which:
FIGURE 1 illustrates an overview of the present invention;
FIGURE 2 is a flow diagram illustrating the method steps of the present invention in accordance with one embodiment;
FIGURES 3a-3b illustrate two embodiments of the web enabled measurement instrument of FIGURE 1;
FIGURES 4a-4b illustrate a hardware view and a software view of one embodiment of web based control subsystem of Figure 3b;
FIGURES 5a-5b illustrate two exemplary screens for one embodiment of a web page interface in accordance with the present invention;

### DETAILED DESCRIPTION OF THE INVENTION

In the following description, various aspects of the present invention will be described. Those skilled in the art will also appreciate that the present invention may be practiced with only some or all aspects of the present invention. For purposes of explanation, specific numbers, materials and configurations are set forth in order to provide a thorough understanding of the present invention. However, it will also be apparent to one skilled in the art that the present invention may be practiced without the specific details. In other instances, well known features are omitted or simplified in order not to obscure the present invention.

Parts of the description will be presented in terms of operations performed by a computer system, using terms such as data, flags, bits, values, characters, strings, numbers, Boolean operators, etc., consistent with the manner commonly employed by those skilled in the art to convey the substance of their work to others skilled in the art. As well understood by those skilled in the art, these quantities take the form of electrical, magnetic, or optical signals capable of being stored, transferred, combined, and otherwise manipulated through mechanical and electrical components of the computer system; and the term computer system includes general purpose as well as special purpose data processing machines, systems, and the like, that are standalone, adjunct or embedded.

Various operations will be described as multiple discrete steps in turn in a manner that is most helpful in understanding the present invention, however, the order of description should not be construed as to imply that these operations are necessarily order dependent, in particular, the order of their presentations.

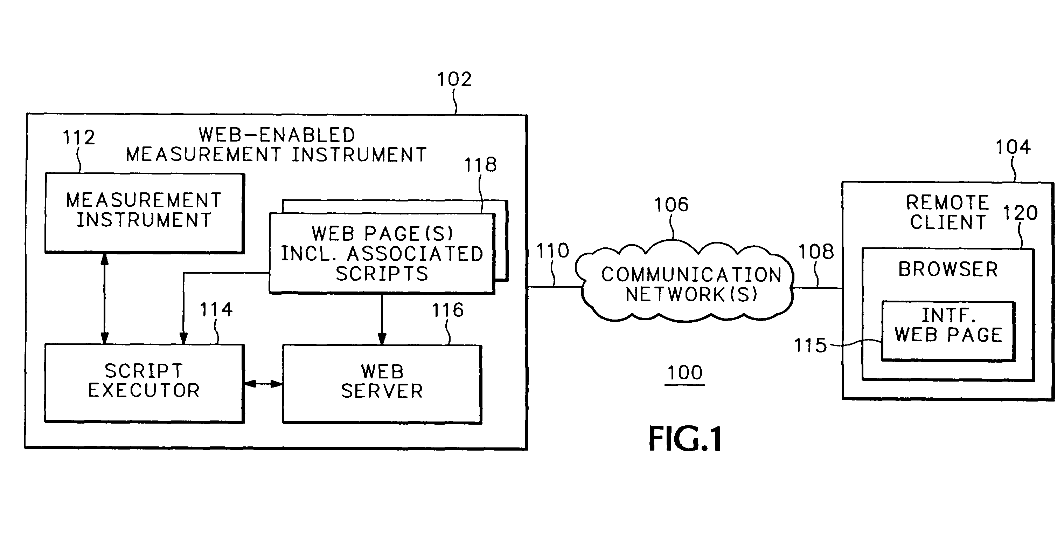

Referring now to **Figure 1**, a block diagram illustrating an overview of the present invention is shown. As illustrated, in accordance with the present invention, measurement instrument **112** is web enabled, forming web enabled measurement instrument **102** that is capable of receiving commands or information to effectuate an operation on measurement instrument **112** from a user using browser **120** executing on remote client computer **104**. Examples of such operations are monitoring or control operations, and the commands or information are monitoring commands, control commands, or information that facilitate identification of the monitoring or control operation of interest. As will be described in more details below, in response, the operation is effectuated in accordance with the commands or information provided. Furthermore, results of the operation, if applicable, are returned to browser **120** of remote client computer **104** for the user. The results of the operation returned may include data obtained from measurement instrument **112**.

Client computer **104** including browser **120** are intended to represent a broad category of these elements known in the art. For example, client computer **104** may be model Dimension® desktop computer, available from Dell Computer of Austin Texas, whereas browser **120** may be Navigator® 3.0 available from Netscape Communication of Mountain View, CA. As will be readily apparent from the description to follow, the present invention may be practiced with a basic browser without additional plug-ins, however, does not preclude their use for additional functions.

Client computer **104** is coupled to web enabled measurement instrument **102** through communication links **108** and **110** and communication network(s) **106.** Communication links **108** and **110** as well as communication network(s) **106** are also intended to represent a broad category of these elements known in the art. For example, communication network(s) **106** may be a local area network (LAN), such as an Ethernet network, formed with hubs and cables, and communication links **108** and **110** are segments of the LAN. Alternatively, communication network(s) **106** may be a private or virtually private wide area network (WAN), such as a frame relay network, formed with router, switches and cables, and communication links **108** and **110** are access lines to the WAN. Communication network(s) **106** may also be the a public network, such as the Internet, formed with point of presence (POP) providers interconnected by backbone interconnections, and optionally the public switching telephone network (PSTN), and communication links **108** and **110** may be networked or dial up links to the POP providers.

Measurement instrument **102** is web enabled by associating web server **116**, script executor **114** and one or more web pages **118** with measurement instrument **112**. Web pages **118** also include one or more associated scripts (not separately shown). Web server **116** in conjunction with at least one of web pages **118** enable the user to conveniently provide monitoring commands, control commands, or information associated with monitoring or control operations on measurement instrument **112** using commonly available browser **120** from a commonly available remote client computer **104**. Web server **116** in conjunction with script executor **114** and web pages **118** (including associated scripts) enable measurement instrument **112** to be monitored or controlled or data to be extracted responsive to the monitoring commands, control commands or information provided. Furthermore, elements **114-118** enable responses of measurement instrument **112** to the control or the data extracted to be returned to browser **120** and conveniently rendered for the user. Web server **116** and script executor **114** are intended to represent a broad category of these elements known in the art. An example of web server **116** is Quid Pro Quo™ web server, a shareware software available from Social Engineering Inc., of Berkeley, CA, whereas an example of script executor **114** is Frontier Scripting™ avallable from UserLand Software of CA. Other web servers and script executors may be employed. The contents of web pages **118** including their associated scripts are application dependent. In alternate embodiments, in lieu of script executor and scripts, equivalent implementations in other high level languages, such as JAVA™ execution environment and JAVA® applets, may be employed instead.

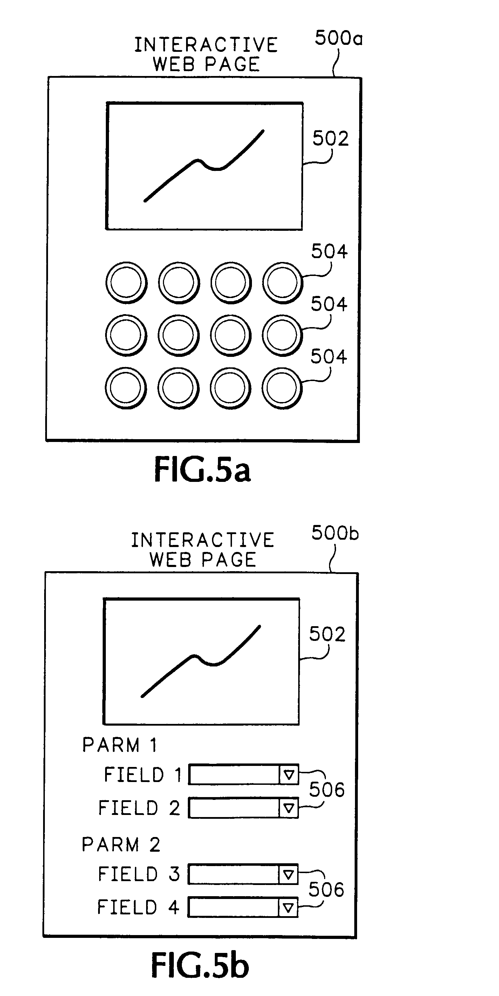

Skipping now to **Fig. 5a-5b**, two exemplary screens of one embodiment of a web page interface are illustrated. For the first exemplary screen, interface web page **500a** is a simplified abstraction of the front panel of the measurement instrument, in this case, an oscilloscope. As shown, interface web page **500a** includes display area **502** where the measurement data are graphically presented. Additionally, interface web page **500a** includes various control buttons **504** to facilitate user selection of different monitoring or control command groups, e.g. commands associated with controlling the vertical setting of the measurement instrument, command associated with controlling the horizontal setting of the measurement instrument, and so forth. For the second exemplary screen, interface web page **500b** provides additional commands or input fields to facilitate further user inputs for parameter values associated with selected command group. As shown, interface web page **500b** still includes display area **502** where the measurement data are graphically presented. However, in lieu of commands **504,** interface web page **500b** includes input fields **506** to facilitate input of various parameter values associated with the monitoring or control operations. Examples of these input fields include the scale, positioning and coupling of a channel, and the source and voltage level of a trigger. In one embodiment, interactions with selected ones of control buttons **504** or input fields **506** result in identifiers of scripts to be executed to be provided to the web server, along with the user supplied parameters values, if any.

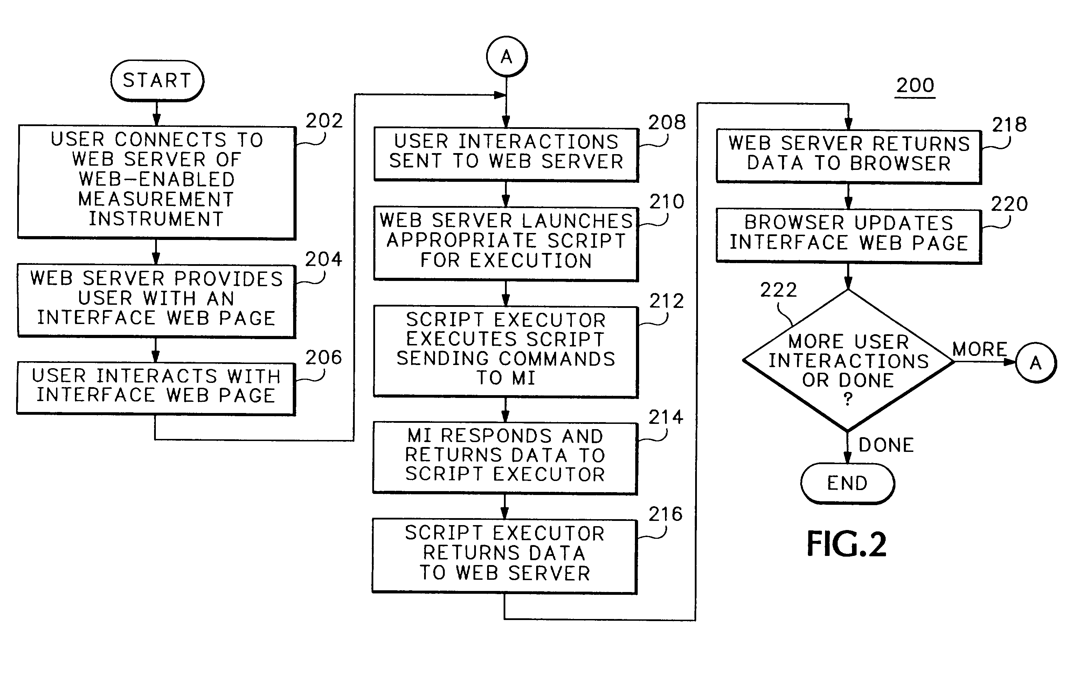

Referring now to **Fig. 2**, the method steps of the present invention in accordance with one embodiment are shown in further details. As illustrated, a user desiring to remotely monitor or control a measurement instrument first connects to a web server associated with the measurement instrument using a browser executing on a remote client computer, step **202**. In response to the connection, the associated web server presents an interface web page to the user, through the connecting browser, step **204**. Next, the user interacts with selected ones of the control buttons or the input fields to provide the measurement instruments with monitoring commands, control commands, or information associated with monitoring or control operations on the measurement instrument, step **206**. At step **208**, the monitoring commands, control commands, or information are sent from the browser to the associated web server. In response to the received monitoring commands, control commands, or information, the web server causes one or more scripts to be launched for execution by the script executor, step **210**. At step **212**, the script executor executes the scripts providing commands to the measurement instrument as appropriate. Examples of such commands, in the case of an oscilloscope, include but not limited to "autoset", "setting the vertical scale to a particular scale value", "setting the horizontal scale to a particular scale value" and "retrieving the x, y values of the displayed graph".

At step **214**, the measurement instrument responds to the monitoring commands, control commands, or information provided, or the data requested of the script executor. At step **216**, the script executor transfers the responses of the measurement instrument or the data extracted to the web server for forwarding to the user. At step **218**, the web server returns the responses of the measurement instrument or the data extracted to the browser for rendering for the user. Finally, at step **220**, the browser refreshes the interface web page with the responses or data received.

Steps **208-220** are repeated for as long as the user continues to interact with the interface web page. Eventually, the process terminates when the user disconnects from the web server.

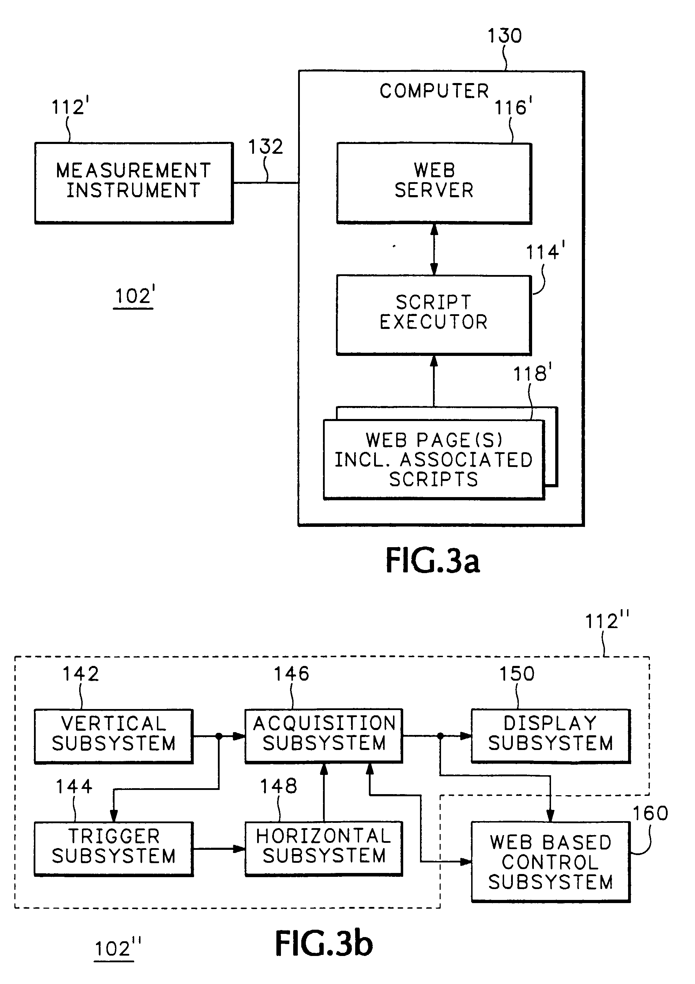

**Fig. 3a-3b** illustrate two embodiments of web enabled measurement instrument **102.** In **Fig. 3a**, web enabled measurement instrument **102**' is formed by externally coupling measurement instrument **112'** to server computer **130**, which is equipped with web server **116'**, script executor **114'** and one or more web pages **118'**. As described earlier, web pages **118'** include one or more associated scripts. For the illustrated embodiment, measurement instrument **112'** is externally coupled to server computer **130** through communication link **132**. In one embodiment, communication link **132** is a conventional RS232 interface. In alternate embodiments, communication link **132** may be a conventional serial interface or a conventional parallel interface instead. In yet other embodiments, communication link **132** may be a bus interface instead, such as the universal serial bus or the IEEE 1394 high speed serial bus.

In **Fig. 3b**, web enabled measurement instrument **102"** is formed by closely coupling acquisition subsystem **146** and display subsystem **150** of measurement instrument **112"** to newly provided web based control subsystem **160**. In other words, newly provided web based control subsystem **160** and the conventional subsystems, i.e. subsystems **142-150**, together form an integrated web enabled measurement instrument **102"**. Vertical subsystem **142**, trigger subsystem **144**, acquisition subsystem **146,** horizontal subsystem **148** and display subsystem **150** are intended to represent a broad category of these elements known in the art. Each of elements **142-150** performs its conventional functions, and the elements' constitutions are known. Accordingly, elements **142-150** will not be further described.

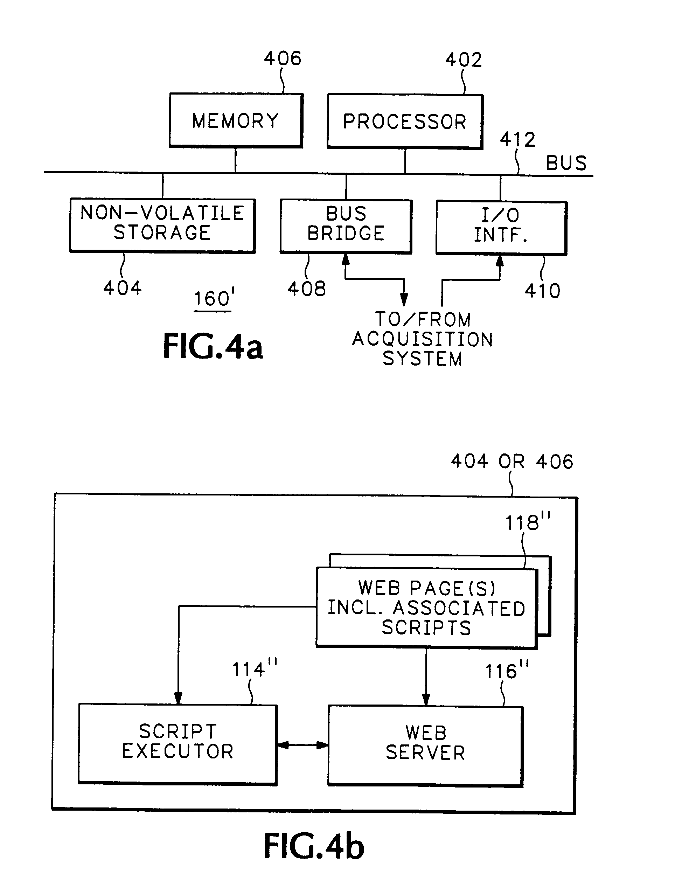

**Fig. 4a-4b** illustrate an hardware and a software view of an exemplary embodiment of web based control subsystem **160**. As shown in **Fig. 4a**, for the illustrated embodiment, web based control subsystem **160'** includes processor **402**, non-volatile storage **404**, memory **406**, bus bridge **408**, and I/O interface **410**, coupled to each other through internal bus **412**. Bus bridge **408** is also coupled to the acquisition subsystem to facilitate provision of monitoring or control commands and receipt of responses of the acquisition subsystem to and from the acquisition subsystem, whereas I/O interface **410** facilitates receipt of the graphical display data from the acquisition subsystem. In one embodiment, internal bus **412** is a peripheral component interconnect (PCI) bus, whereas bus bridge **408** is a PCI-PCI bridge. As shown in **Fig. 4b**, non-volatile storage **404** and memory **406** are used to store the permanent and working copies of the web server, the script executor, and the web pages including the associated scripts described earlier. The permanent copy of the web server etc. may be preloaded in the factory or field installed (if web enabled measurement instrument **102"** also includes the necessary input or communication devices). Elements **402-412** are all intended to represent a broad category of these elements known in the art. Each of elements **402-412** perform its conventional functions known in the art, and their constitutions are known. Accordingly, elements **402-412** will not be further described either.

Tables 1-9 illustrate various exemplary scripts suitable for used to practice the present invention. Tables 1-7 form a single script, and are designated a separate tables merely for convenience in referring to the different sections of the script. In particular, Tables 1-7 illustrate an exemplary script suitable for use to generate a "front panel" web page for the user. For the exemplary script, table 1 describes various relevant parameters, e.g. the client's IP address, the server name, the TCP/IP port of the server, and so forth. Table 2 describes the logic associated with the various actions to be taken in response to certain user actions. Table 3 describes the various command "buttons" to be included and displayed for the web page. Tables 4 and 5 illustrates two exemplary scripts for generating enumerated and text choices for input fields of the web page. Table 6 describes the associated logic. Finally, tables 7 and 8 illustrate two exemplary scripts for providing monitoring or control commands to the measurement instrument. Table 7 illustrates the exemplary source code for querying an oscilloscope's current settings, whereas Table 8 illustrates the exemplary source code for capturing the current measurement data. The precise meaning of these statements are unimportant, even though they are readily apparent to those skilled in the art. The exemplary scripts are merely shown for illustrative purpose. The precise statements to be employed are application dependent, i.e. dependent on the type of measurement instrument, the type of end user interface offered, the number and types of user commands and input fields offered, the nature of responses to the various user actions, and so forth. Implementations of these and other application dependent scripts are well within the ability of those skilled in the art. Accordingly, they will not be further described.

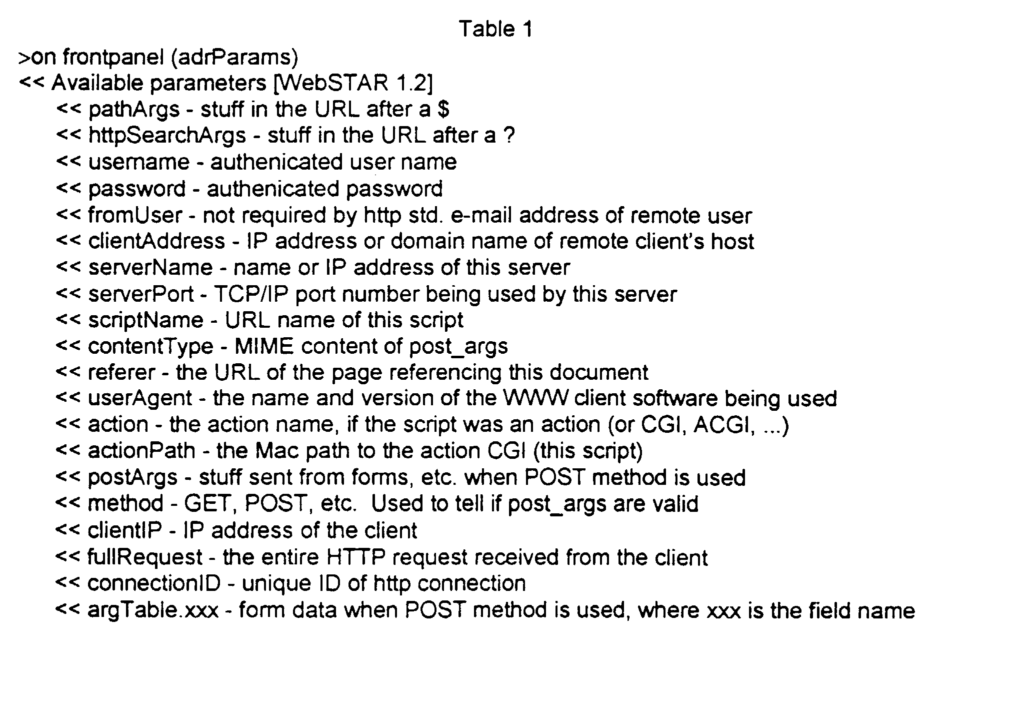

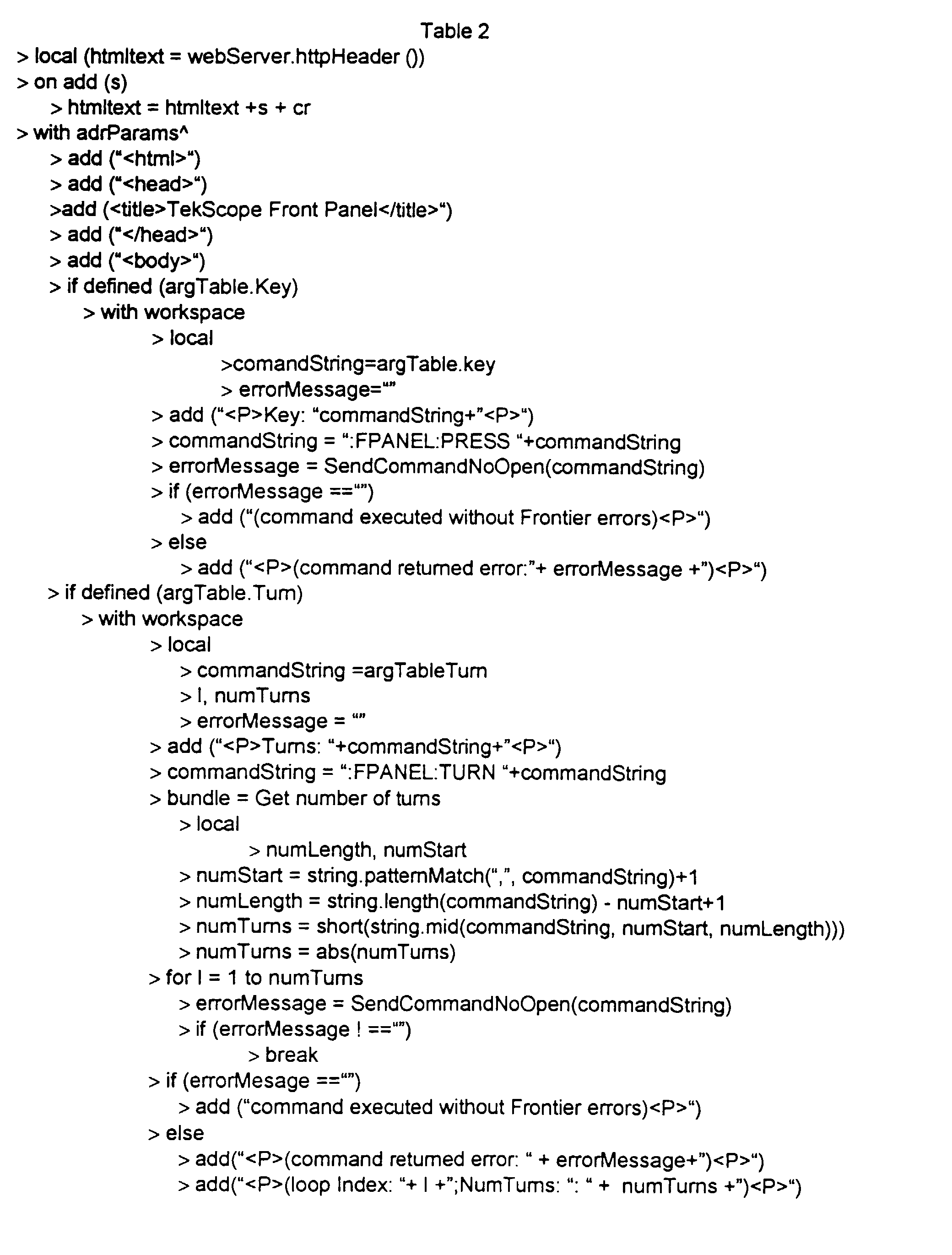

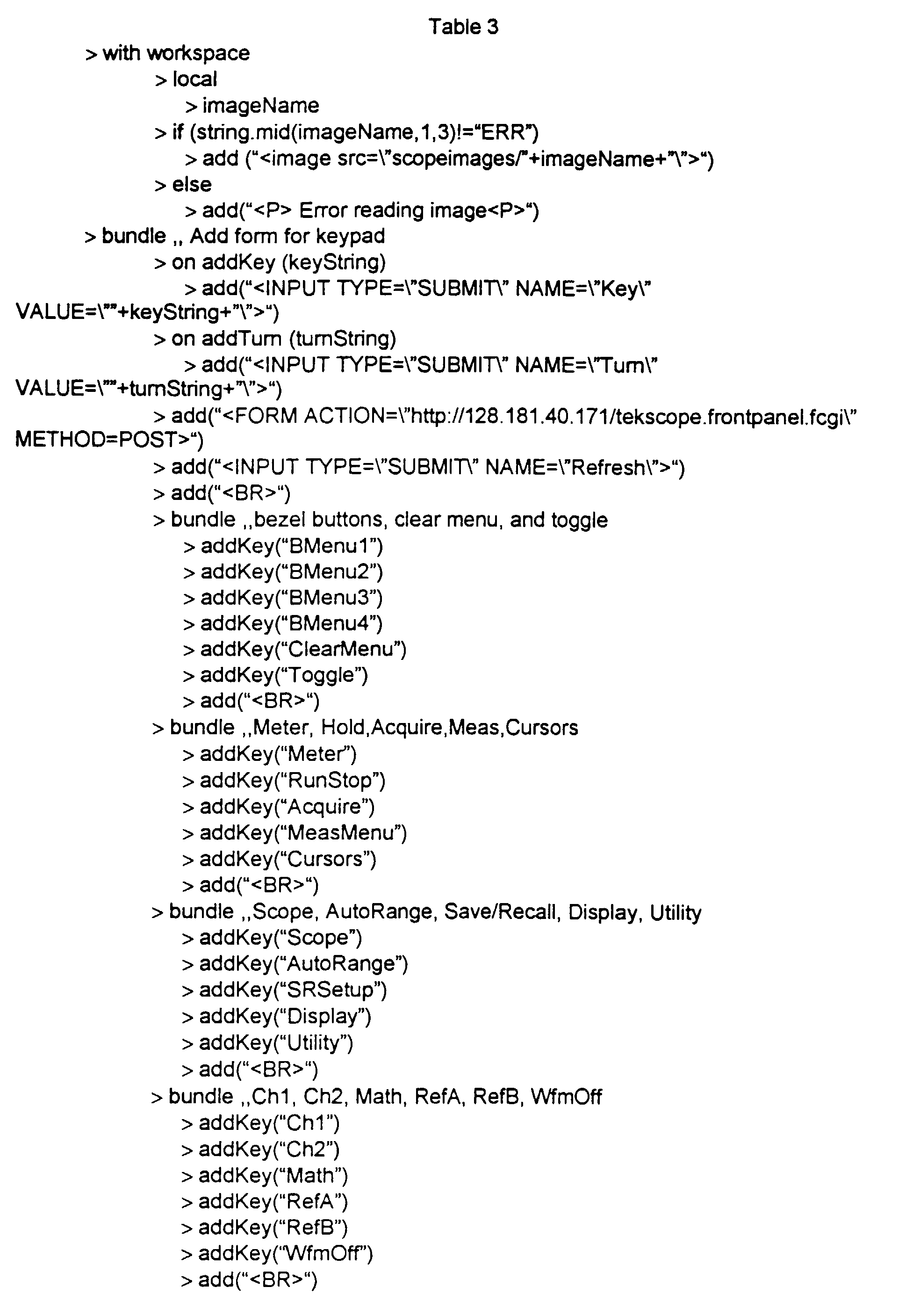

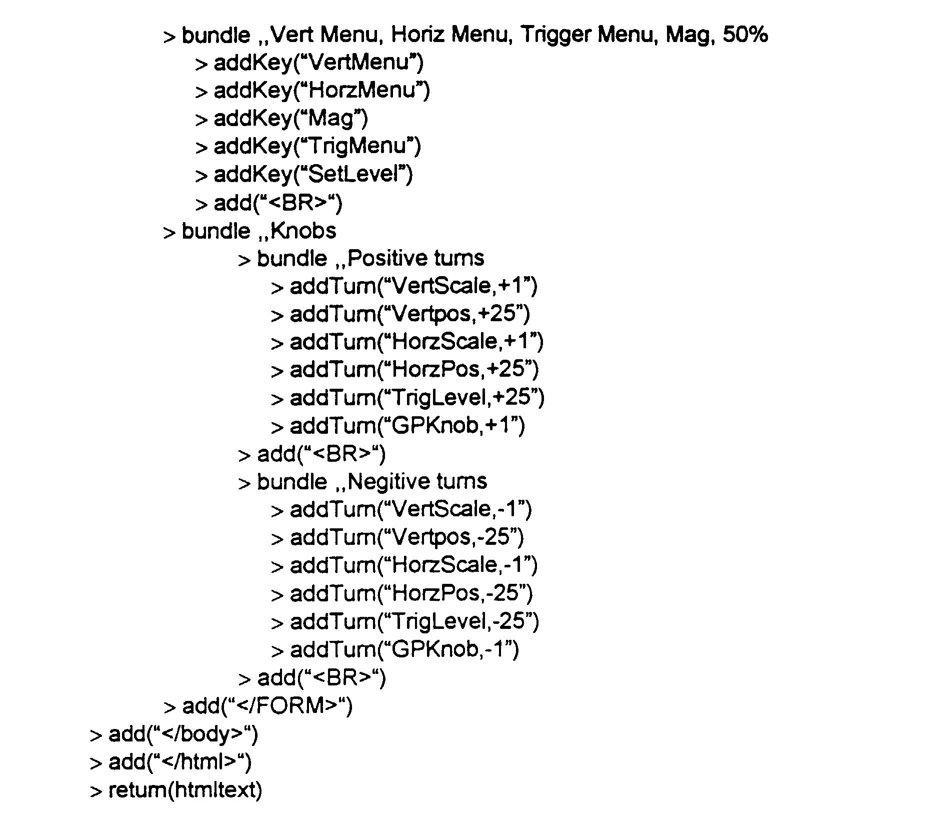

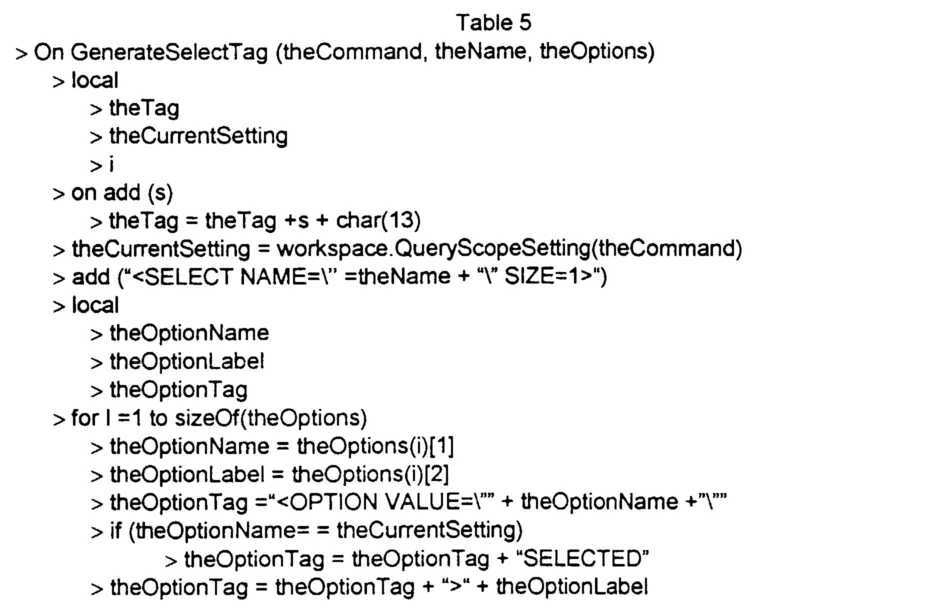

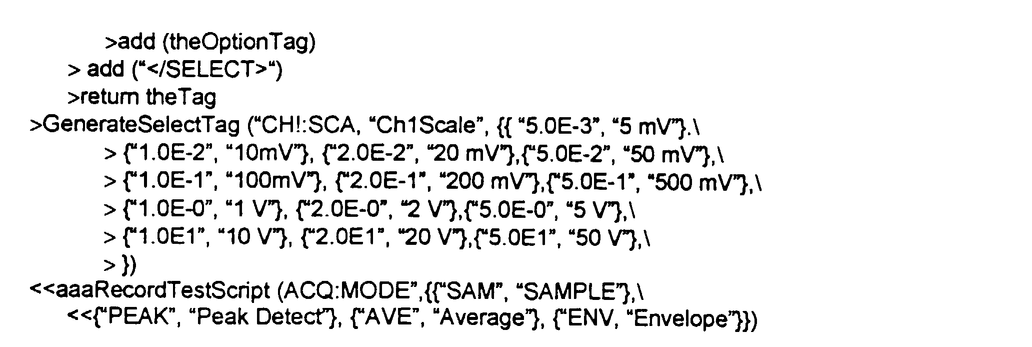

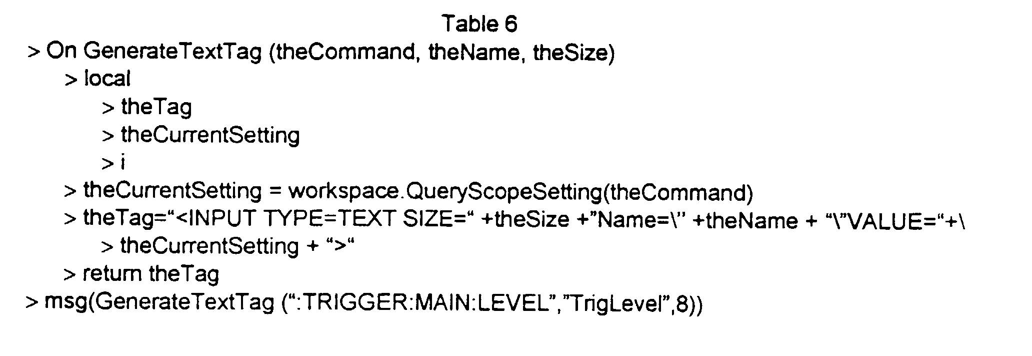

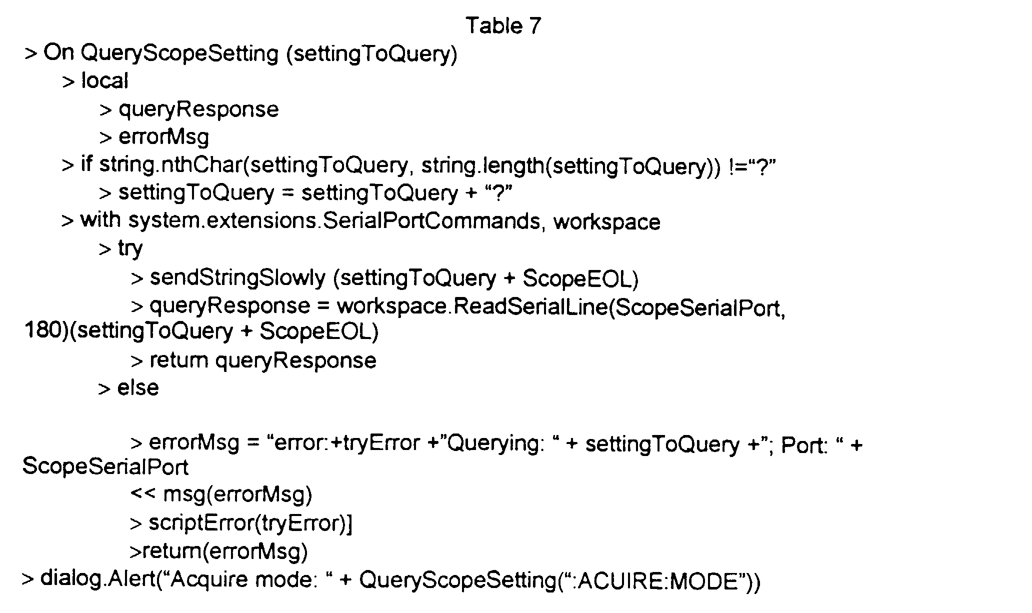

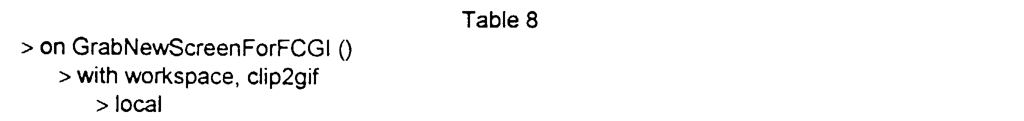

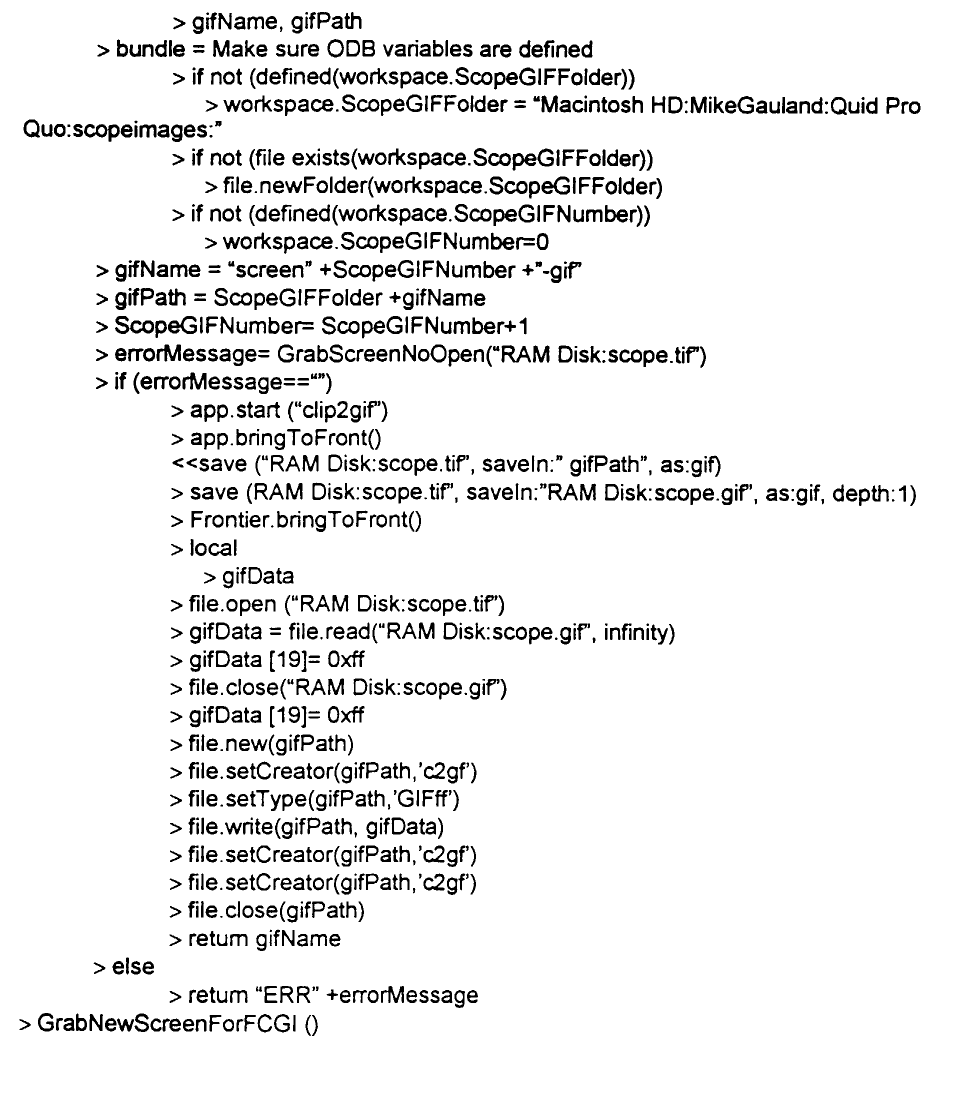

In general, those skilled in the art will appreciate that through the novel approach of web enabling a measurement instrument as described earlier, a user is advantageously enabled to monitor or control the measurement instrument remotely through commonly available tools such as a browser executing on a commonly available client computer, a very user friendly approach. Furthermore, the web enabling approach described earlier may be effectuated through substantially "off-the-shelf" components, without resorting to costly and burdensome proprietary interfaces and mechanisms.

Those skilled in the art will also recognize that the present invention is not limited by the details nor the embodiments described. Instead, the present invention can be practiced with modifications and alterations within the spirit and scope of the appended claims. The description is thus to be regarded as illustrative instead of restrictive on the present invention.

Thus, a method and apparatus for remote monitoring or control of a measurement instrument has been described.

## Claims

1. In a server computer, a machine implemented method comprising the steps of:
a) providing by a web server to an executor, both executing on the server computer, commands or information, received by the web server from a browser executing on a remote client computer, corresponding to an operation to be effectuated on a measurement instrument; and
b) effectuating the operation on the measurement instrument by the executor in accordance with the commands or information provided by the web server.

2. The method of claim 1 wherein
the step of providing comprises receiving by the web server information identifying a collection of executable instructions to be executed to effectuate the operation on the measurement instrument, from the browser of the remote client computer, and providing by the web server to the executor the identified collection of executable instructions; and
the step of effectuating comprises executing by the executor the identified collection of executable instructions.

3. The method of claim 1 wherein the step of effectuating comprises forwarding a control or data obtaining command to the measurement instrument by the executor of the server computer.

4. The method of claim 1 wherein method further comprises the step of:
c) forwarding results of the effectuated operation to the browser of the remote client computer by the web server of the server computer.

5. The method of claim 4 wherein the step of forwarding further comprises receiving by the executor responses of the measurement instrument or data being obtained, and providing by the executor to the web server the received responses or data obtained.

6. In a measurement instrument, a method comprising the steps of:
a) providing control or data obtaining commands by a web based control subsystem to an acquisition subsystem, both subsystems of the measurement instrument, in response to commands or information to effectuate an operation on the measurement instrument receiving by the web based control subsystem from a browser executing on a remote client computer; and
b) operating the measurement instrument by the acquisition subsystem in accordance with the control or data obtaining commands provided.

7. The method of claim 6 wherein the step of providing comprises receiving by a web server of the web based control subsystem, from the browser of the remote client computer, information identifying a collection of instructions to be executed to effectuate the operation, providing by the web server to an executor of the web based control subsystem the received identification information, and executing the identified collection of instructions by the executor, which results in the provision of the control or data obtaining commands to the acquisition subsystem.

8. The method of claim 6 wherein the method further comprises the step of:
c) providing results of the operation by the web based control subsystem to the browser of the remote client computer.

9. The method of claim 8 wherein the step of providing comprises receiving by an executor of the web based control subsystem of the measurement instrument responses or data being obtained from the acquisition subsystem of the measurement instrument, providing by the executor to a web server of the web based control subsystem the received responses or data obtained, and forwarding by the web server to the browser of the remote client computer the provided responses or data obtained.

10. A server computer comprising:
a storage medium having stored therein a first and a second plurality of programming instructions that implement a web server and an executor respectively, when executed, enabling the server computer to operate to receive commands or information to effectuate an operation on a measurement instrument from a browser of a remote client computer, enabling the server computer to operate the measurement instrument responsive to the received commands or information, and forwarding results of the operation, when applicable, to the browser of the remote client computer; and
(b) a processor coupled to the storage medium to execute the first and second plurality of programming instructions.

11. The server computer of claim 10 wherein, when executed, the first plurality of programming instructions implementing the web server enable the server computer to receive information corresponding to a third plurality of programming instructions to be executed to effectuate the operation on the measurement instrument from the browser of the remote client computer, and provide the received information to the executor.

12. The server computer of claim 10 wherein, when executed, the second plurality of programming instructions implementing the executor enable the server computer to execute a third plurality of programming instructions to effectuate the operation on the measurement instrument, including forwarding of a control command to the measurement instrument.

13. The server computer of claim 10 wherein, when executed, the second plurality of programming instructions implementing the executor enable the server computer to execute a third plurality of programming instructions to effectuate the operation on the measurement instrument, including forwarding of a data obtaining command to the measurement instrument, receiving the data being obtained from the measurement instrument, and providing the received data to the web server for forwarding to the browser of the remote client computer.

14. The server computer of claim 10 wherein the server computer further comprises a first and a second communication interface coupling the remote client computer and the measurement instrument to the server computer respectively.

15. A measurement instrument comprising:
an acquisition subsystem to be used to acquire measurement data; and
a web based control subsystem coupled to the acquisition subsystem to be used to receive commands or information corresponding to an operation from a browser executing on a remote client computer, and to cause the acquisition subsystem to effectuate the operation responsive to the received commands or information.

16. The measurement instruction of claim 15 wherein the web based control subsystem comprises:
a storage medium having stored therein a first plurality of programming instructions implementing a web server, when executed, enabling the web based control subsystem to receive from the browser of the remote client computer information corresponding to a second plurality of programming instructions to be executed to cause the operation to be effectuated by the acquisition subsystem, and when applicable, to forward responses of the acquisition subsystem to the browser of the remote client computer; and
a processor coupled to the storage medium to be used to execute the first plurality of programming instructions.

17. The measurement instrument of claim 16 wherein the responses of the acquisition subsystem forwarded include data obtained from the acquisition subsystem.

18. The measurement instruction of claim 15 wherein the web based control subsystem comprises:
a storage medium having stored therein a first plurality of programming instructions implementing an executor, when executed, enabling the web based control subsystem to execute a second plurality of programming instructions to cause the acquisition subsystem to effectuate the operation on the measurement instrument, and when applicable, receiving responses of the acquisition subsystem to be forwarded to the browser of the remote client computer; and
a processor coupled to the storage medium to be used to execute the first plurality of programming instructions.

19. The measurement instrument of claim 18 wherein the storage medium further having stored therein the second plurality of programming instructions, and the processor is also used to execute the second plurality of programming instructions.

20. The measurement instrument of claim 18 wherein when executed, the second plurality of programming instructions cause a control of data obtaining command to be provided from the web based control subsystem to the acquisition subsystem.

21. A computer program for implementing a method as claimed in any one of claims 1 to 9.

22. A computer-readable storage medium storing a program as claimed in claim 21.
